# EUROPEAN PATENT SPECIFICATION

(11) **EP 1 992 217 B1**
(45) Date of publication and mention of the grant of the patent: **12.04.2017**
(21) Application number: 08155215.0
(22) Date of filing: 25.04.2008
(51) Int. Cl.: A01G 9/10, C05B 13/06

(54) **FERTILIZER FOR POTTING SOIL**
DÜNGEMITTEL FÜR BLUMENERDE
ENGRAIS POUR TERREAU

(30) Priority: 25.04.2007 NL 1033757
(43) Date of publication of application: 19.11.2008
(73) Proprietor: Yara Vlaardingen B.V., 3133 CA Vlaardingen (NL)
(72) Inventor: de Vries, Pieter, 3133 KA, Vlaardingen (NL); van Duijn, Theodorus Johannes, Vlaardingen, 3133 KA (NL)
(74) Representative: V.O.

(56) References cited:
- EP-A- 0 707 787
- EP-A- 0 906 722
- WO-A-00/63138
- WO-A-01/01757
- WO-A-02/45512
- WO-A-96/28013
- DE-A1- 1 932 198
- DE-A1- 10 007 759
- US-A- 3 171 733
- US-A- 3 558 300
- Luis Omar Torres-Dorante ET AL: "Fertilizer-use efficiency of different inorganic polyphosphate sources: effects on soil P availability and plant P acquisition during early growth of corn", Journal of Plant Nutrition and Soil Science, vol. 169, no. 4, 1 August 2006 (2006-08-01), pages 509-515, XP055206013, ISSN: 1436-8730, DOI: 10.1002/jpln.200520584
- Luis O. Torres-Dorante ET AL: "Hydrolysis rates of inorganic polyphosphates in aqueous solution as well as in soils and effects on P availability", Journal of Plant Nutrition and Soil Science, vol. 168, no. 3, 1 June 2005 (2005-06-01), pages 352-358, XP055206019, ISSN: 1436-8730, DOI: 10.1002/jpln.200420494

## Description

The invention relates to a potting soil, to a method for preparing a potting soil, to a method for potting a plant and to a use of potting soil. It is known to provide potting soil with fertilizers for improving plant growth. Such a fertilizer which is added to potting soil is composed of various soluble mineral salts, which contain, inter alia, nitrogen (in the form of nitrate and/or ammonium and/or urea), phosphorus, potassium, magnesium, sulphur and/or calcium.

Also, trace elements (such as B, Cu, Fe, Mn, Mo, Zn) can be added, which may or may not be completely or partly bonded to a chelate. PG Mix™ (Nu3 BV) is for instance a commercially available product that is suitable as complete fertilizer for mixing into potting soils.

There is a constant need for potting soil in which plants can grow more rapidly, so that the production time is shortened and/or with which plants of better quality can be obtained.

It is an object of the invention to provide a potting soil which provides for an accelerated growth and/or improved quality of a plant.

Presently, it has been found that it is possible to achieve this object by providing the potting soil with a specific fertilizer.

Therefore, the invention relates to potting soil according to claim 1..

The invention further relates to a method for potting a plant, which plant contains one or more roots, comprising placing a plant in a potting soil according to the invention. Placing for that matter can take place in a conventional manner, whereby the root or roots are placed completely or partly in the potting soil and the stem or stems and leaf or leaves remain at least substantially above ground.

A potting soil according to the invention is preferably utilized for growing plants (i.e. the complete organism, root, stem and leaf included) after the seedling phase, although it is possible, in principle, to use it instead for growing a seedling, or as germination substrate for nursing parts of plants, in particular cuttings.

The invention further relates to a method for preparing a potting soil according to claim 11.

Surprisingly, it has been found that a plant that is allowed to grow in such potting soil has a desired size within a shorter time span. It has been found in particular, that the initial growth phase (i.e. the period from potting a young plant to a deliverable plant) can be shortened by approximately 5 % or more, depending on the type of plant, for instance from approximately 12 weeks to approximately 11 weeks or less.

It has further been found that a potting soil provided with a fertilizer according to the invention can be used in particular for increasing the leaf density, increasing the number of flowers per plant, increasing the root development and/or increasing the number of stems per plant.

It has further been found that a potting soil provided with a fertilizer according to the invention is suitable for improving the leaf color. For instance, a brighter or darker leaf color can be obtained.

It has further been found that growing in a potting soil provided with a fertilizer according to the invention can have a positive effect in more than one season, in particular both in spring and autumn and/or when the crop exhibits reduced growth.

Potting soil is a rooting medium that is suitable for potting plants. In general, potting soil contains a vegetable component, in particular vegetable fiber material. The vegetable component can comprise in particular one or more components from the group of (ground) peat, (ground) dried peat, (ground) bark, compost and ground husks of a (hard) fruit. Examples of such fruits are coconut and cocoa. Potting soil is by nature poor in nutrients. The vegetable component comprises at least 40 vol. % of the solids, in particular at least 60 vol.-%, more in particular at least 70 vol. % of the solids.

In addition, potting soil can contain a fertilizer (organic fertilizer and/or artificial fertilizer) and/or an inorganic (natural) material, such as clay, lava grit and/or sand and the like.

The content of such inorganic materials (additives), in particular clay, lava grit, limestone and/or sand, is usually at most 50 vol.-%, more particularly at most 30 vol.-% of the solids. If present, the content is usually at least 2 vol.-%.

A polyphosphate as meant herein is built up from at least three phosphate groups. Preferably, it is a polymer in the form of a salt of the polyphosphate with a suitable cation. Particularly suitable are monovalent cations, in particular alkali metal ions, in particular sodium and/or potassium ions, or ammonium. Potassium polyphosphate is particularly preferred.

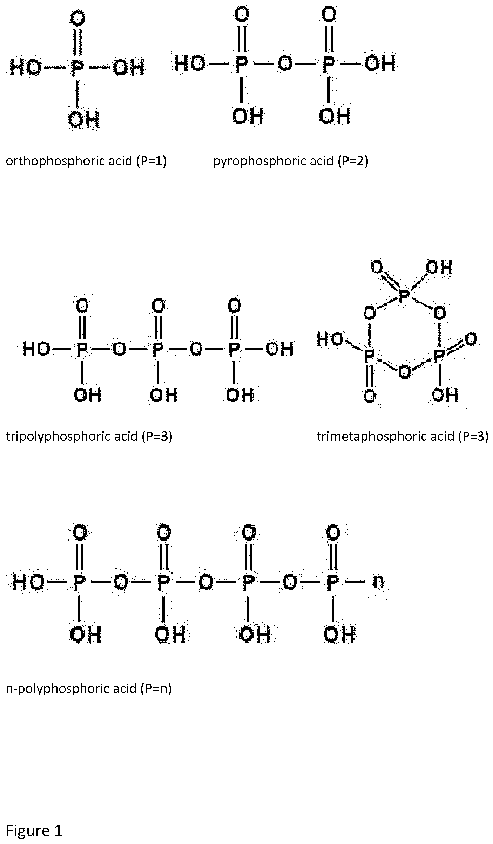

In Fig. 1, a number of relevant phosphate forms are represented.

The polyphosphate can have a chain form (without ring). Such a polyphosphate can be represented by the formula M'-O-[P(OM')(O)-O]ₙ-M', wherein M' is the cation and n represents the number of phosphate units. Such a polyphosphate with an unbranched chain is also called n-polyphosphate.

The polyphosphate, or at least a part thereof, can be metaphosphate, i.e. a cyclic polyphosphate. Such a polyphosphate can be represented with the gross formula (M'PO₃)ₙ, with M' and n having the above-mentioned meaning. In Fig. 1, as example, trimetaphosphate is represented, a cyclic polyphosphate with three phosphate units.

The number average number of phosphate units per polyphosphate molecule (in the case of n-polyphosphate, the chain length) in the potting soil is 3 or more than 3, preferably at least 5, more preferably at least 10, still more preferably at least 15, most preferred at least 25.

Based on a practical test, without being bound to any theory, it is suspected that a relatively high number average number of phosphate units per polyphosphate molecule is of advantage for obtaining a desired effect, for instance an accelerated growth and/or an improved development of the plant or a part thereof. In particular it is suspected that a desired effect, such as accelerated growth, occurs for a relatively long period of time, for instance at least three weeks, at least 4 weeks or at least 5 weeks. It is surprising that polyphosphate in potting soil remains sufficiently intact for a sufficiently long period of time to have a favourable effect on the growth of a (pot) plant. Internal research has shown that the polyphosphate containing potting soil can be preserved for at least a number of weeks, in particular at least 6 weeks, before plants are potted therein, with the polyphosphate still having a positive effect on the development of the plant. It has further been found through internal research that plants, fertilized with pyrophosphate (and orthophosphate) sustained a growth deficiency with respect to plants fertilized with only orthophosphate. Surprisingly, it has been found that plants in a potting soil according to the invention sustained no growth deficiency with respect to plants fertilized with only orthophosphate and, as a rule, developed even better.

The upper limit is not particularly critical. From practical considerations, the number average number of phosphate units per polyphosphate molecule is at most 400, in particular at most 200, more particularly at most 150 or at most 100.

The fertilizer, or at least the polyphosphate, or at least a part of the polyphosphate, is preferably present as a solid, in particular in a crystalline form. With particular preference, 50 - 100% of the polyphosphate, more particularly 75 - 100% or 90 - 100%, is present as a solid. It has been found that the presence of polyphosphate as a solid is favourable for the growth speed of the plant and/or has another advantageous effect, such as mentioned hereinabove, with respect to a potting soil in which the polyphosphate in liquid form (dissolved in water) is mixed with the potting soil. The inventors have also realized that polyphosphate containing granules or polyphosphate containing powder is easily mixable whereby a mixture can be provided in which the polyphosphate is highly homogeneously distributed. It is further of advantage that one or more possible disadvantages of moisture (introduced when polyphosphate is added as liquid) can be prevented or at least reduced. For instance, the presence of moisture increases the specific weight of the potting soil, which is disadvantageous from the point of view of transport.

In addition to polyphosphate, also orthophosphate is present. The weight ratio of polyphosphate (expressed as P₂O₅) to orthophosphate (also expressed as P₂O₅) preferably is at least 25:75, in particular at least 65:35.

The weight ratio of polyphosphate (as P₂O₅) to orthophosphate (also as P₂O₅) is preferably at most 75:25, in particular at most 65:35.

The total amount of phosphate, and/or, if desired, one or more other nutrients, in particular selected from the group of nitrogen (in the form of nitrate, ammonium and/or urea), potassium (expressed as % by weight of K₂O), magnesium (expressed as % by weight of MgO), sulphur (expressed as % by weight of SO₃) and/or calcium (expressed as % by weight CaO) and trace elements (such as B, Cu, Fe, Mn, Mo, Zn), can be selected within a customary range. Preferably, the fertilizer is an N - K - Mg - S - Ca fertilizer, if desired supplemented with trace elements.

According to the European Community Scheme for Fertilizers (Regulation (EC) number 2003/2003 of 13 October 2003 relating to Fertilizers) the contents of K, Mg, S and Ca are expressed as oxides: K as % by weight of K₂O, P as % by weight of P₂O₅, Mg as % by weight of MgO, Ca as % by weight of CaO, S as % by weight of SO₃. Nitrogen is expressed as % by weight of N, optionally followed by the form in which it is present: nitrate, ammonium and/or urea. The trace elements are represented in the form of the pure element. All percentages mentioned are percentages by weight unless stated otherwise. Represented in accordance to this law, the amount of N, K, Mg, S and Ca in the fertilizer can in particular be selected within the following ranges.

The nitrogen content of the fertilizer is preferably 0 - 35%, in particular 1 - 20%.

The phosphorus content is preferably at most 52%, in particular at most 30%, more particularly at most 20% (expressed as P₂O₅). Usually, the content is at least 2%, in particular at least 3%, more particularly at least 4%.

The potassium content is preferably at most 40%, in particular at most 30% (expressed as K₂O). If present, the potassium content is preferably at least 10%.

The magnesium content is preferably 0 - 10%, in particular 0.5-10% (represented as MgO).

The calcium content is preferably 0 - 10%, in particular 1 - 10% (represented as CaO).

The sulphur content is preferably at most 40%, in particular 5 - 40% (represented as SO₃).

The boron content is usually 0 - 0.5% by weight, preferably at most 0.25%. If present, the content is preferably at least 0.01%.

The copper content is usually 0 - 1%, preferably at most 0.6%. If present, the copper content is preferably at least 0.005%.

The iron content is usually 0 - 1.5%, preferably at most 0.8%. If present, the iron content is preferably at least 0.05%.

The manganese content is usually 0 - 1.5%, preferably at most 0.8%. If present, the manganese content is preferably at least 0.02%.

The molybdenum content is usually 0 - 1%, preferably at most 0.5%. If present, the content is preferably at least 0.002%.

The zinc content is usually 0 - 1%, preferably at most 0.5%. If present, the zinc content is preferably at least 0.01%.

The total concentration of fertilizer is usually at least 0.5 kg/m³ of (uncompressed) potting soil. Usually, the total concentration of fertilizer is at most 1 kg/m³ of potting soil, although the skilled person can choose a different suitable concentration, depending on the use.

The total phosphate content (the sum of orthophosphate and polyphosphate as P₂O₅) is at least 0.02 kg/m³ of (uncompressed) potting soil, in particular at least 0.04 kg/m³. The total phosphate content (as P₂O₅) is at most 0.52 kg/m³ of potting soil (uncompressed), preferably at most 0.16 kg/m³, in particular at most 0.14 kg/m³, more particularly at most 0.10 kg/m³. Preferably, the polyphosphate content (as P₂O₅) is at least 0.01 kg/m³ of potting soil (uncompressed), with particular preference at least 0.02 kg/m³. Usually, the polyphosphate content (as P₂O₅) is at most 0.26 kg/m² (uncompressed), preferably at most 0.07 kg/m³.

A potting soil provided with a fertilizer according to the invention can be utilized for growing various plants. In particular, the plant can be selected from the group of pot plants, bedding plants and flowerbed plants, and from the group of raised vegetables, pot plants, cut flowers, bulbous plants in potting soil, trees and shrubs in pots.

More particularly, the plant can be selected from the group of *Helianthus*, *Clematis, Pelargonium, Cineraria, Dahlia, Buxus, Surfinia,* Daisies, Roses, *Dianthus* (such as *Dianthus caryophyllus*), *Anthurium, Lilium, Orchidaceae* (such as *Cymbidium, Phalaenopsis*)*,* green vegetables (such as lettuce, endive), tomato, cucumber, paprika, lettuce and strawberry.

In particular, good results have been obtained with a plant selected from the group of *Helianthus, Clematis, Pelargonium, Dahlia, Daisy* and *Cineraria.*

The invention further relates to the use of a phosphate containing fertilizer, wherein a part of the phosphate is present as orthophosphate and a part as polyphosphate wherein the weight ratio of polyphosphate to orthophosphate (expressed as P₂O₅) is in the range of 1:9 to 9:1, wherein the polyphosphate has a number average of phosphate units per molecule of 3 or more and at most of 400, and, if desired, at least one nutrient selected from the group of nitrogen containing nutrients, potassium containing nutrients, magnesium containing nutrients and trace elements as basic fertilizer for a plant in a potting soil according to the invention.

The invention also relates to use of a phosphate containing fertilizer, wherein a part of the phosphate is present as orthophosphate and a part as polyphosphate wherein the weight ratio of polyphosphate to orthophosphate (expressed as P₂O₅) is in the range of 1:9 to 9:1, wherein the polyphosphate has a number average of phosphate units per molecule of 3 or more and at most of 400, and, if desired, at least one nutrient selected from the group of nitrogen containing nutrients, potassium containing nutrients, magnesium containing nutrients and trace elements for the prevention or treatment of a nutrition deficiency, such as chlorosis of a plant in potting soil according to the invention.

The invention also relates to use of a phosphate containing fertilizer, wherein a part of the phosphate is present as orthophosphate and a part as polyphosphate, wherein the weight ratio of polyphosphate to orthophosphate (expressed as P₂O₅) is in the range of 1:9 to 9:1, wherein the polyphosphate has a number average of phosphate units per molecule of 3 or more and at most of 400, and, if desired, at least one nutrient selected from the group of nitrogen containing nutrients, potassium containing nutrients, magnesium containing nutrients and trace elements, for accelerating the growth of plants, increasing the leaf density, increasing the number of flowers per plant, increasing the root development, increasing the number of stems per plant and/or improving the leaf color of a plant in potting soil according to the invention.

In a use according to the invention, at least a part of the polyphosphate is preferably a solid, with great preference as indicated hereinabove. For the number of phosphate units per polyphosphate molecule (the chain length for n-polyphosphate) and/or the ratio of polyphosphate to the sum of orthophosphate, the same conventional, special and preferred ranges apply as indicated hereinabove. The total phosphate content (orthophosphate and polyphosphate as P₂O₅) is usually in the range of 4 - 20 % by weight, in particular 4 - 16 % by weight, more particularly 4 - 14% by weight, based on the total weight of the fertilizer.

It is noted that other media for plants than potting soil exist, wherein plants can be stored, transported or grown. WO 96/28013 relates to such medium based on a mass of crimped intermixed cellulose paper strips, having a growth enhancing material adhered to their surface. An example of growth enhancing material is a material comprising a compound containing phosphorous.

The invention will presently be elucidated in and by a few examples.

### Example 1

### Preparation of the fertilizer:

The fertilizer was prepared from PG Mix™ (Nu3 BV (NL)) 12+14+24+3 MgO + trace elements, with a 50/50 weight mixture of polyphosphate and orthophosphate (both as P₂O₅). The total phosphate content was 14% by weight, based on the weight of the fertilizer.

Then, the fertilizer was mixed with potting soil (1 kg of fertilizer per m³ of potting soil).

Each time, the standard PG Mix™ (Nu3 BV (NL)) 12+14+24=2 MgO + trace elements (100% orthophosphate) served as a control. Here too, the total phosphate content was 14% by weight based on the weight of the fertilizer.

A number of pots with *Heliantus* (potted sunflower) were provided with the potting soil provided with polyphosphate containing PG mix (1 kg of PG mix per m³ of potting soil). As control, a number of pots were provided with potting soil with 1 kg PG mix per m³ of potting soil of the standard version (100% orthophosphate) PG Mix™. Three weeks after potting, it was found that the plants in the polyphosphate containing potting soil were higher than the control plants and contained more leaves. In addition, the plants treated according to the invention exhibited an increased growth.

### Example 2

The test of Example 1 was repeated with *Clematis.* A few (3 - 5) weeks after potting, it was found that the plant in the polyphosphate containing potting soil exhibited in particular more root development with respect to comparable plants without polyphosphate containing potting soil.

### Example 3

The test of Example 1 was repeated with *Pelargonium.* 3 - 4 weeks after potting, it was found that the plants in the polyphosphate containing potting soil developed more rapidly, had formed more roots and had grown more. The treated plants had formed more lateral shoots, thereby yielding denser and more compact plants.

The development of the plants treated according to the invention was ahead of that of the control group. This became clearly visible in an earlier flower formation. Owing to the more rapid development, the plant can be delivered sooner. As a result, production time is shortened. It is probable that there is a time gain of approximately 1 week with respect to a growing duration of, initially, 12 weeks.

### Example 4

Three big bags of potting soil were provided with the fertilizer provided with polyphosphate (1 kg/m³ of potting soil). A number of pots were provided with the potting soil provided with polyphosphate. As a control, a number of pots were provided with potting soil with the standard version 1 kg/m³ of PG Mix™.

One week after preparation of the 3 big bags, pots were filled with potting soil provided with polyphosphate containing fertilizer from big bag 1 and each pot was provided with a *Cineraria* plant. After three weeks, three individuals each evaluated and compared, independently of each other, 3 to 4 randomly taken plants with the control plants. It was found that a more rapid development of the roots had occurred and that more roots were formed in the potted soil with polyphosphate. Also, with at least a number of the plants, the leaf color was a brighter green. The plants developed more rapidly.

The test was repeated 2 weeks after big bag 1, but now with potting soil prepared with the polyphosphate containing fertilizer from big bag 2. After 3 weeks, the plants from this batch were evaluated and compared with the control plants of the same age. The same results as with big bag 1 were found.

The test was repeated again 2 weeks after big bag 2. This time, half the content of big bag 3 was used. Now too, the results were comparable to those of big bag 1 and 2.

Finally, the test was repeated two weeks after big bag 3 first half. Now too, the results were comparable.

From this, it can be concluded that polyphosphate mixed in potting soil remains sufficiently stable (active) for 7 weeks or more.

## Claims

1. Potting soil, comprising a phosphate containing fertilizer, wherein a part of the phosphate is present as orthophosphate and a part as polyphosphate, wherein the weight ratio of polyphosphate to orthophosphate (expressed as P₂O₅) is in the range of 1:9 to 9:1, wherein the polyphosphate has a number average of phosphate units per molecule of 3 or more and at most of 400, and wherein the total phosphate content expressed as P₂O₅ (orthophosphate and polyphosphate) is in the range of 0.02 - 0.52 kg/m3 of potting soil, and wherein the vegetable component in the potting soil comprises at least 40 vol.% of the solids in the potting soil.

2. Potting soil according to claim 1, wherein at least a part of the polyphosphate is present in the potting soil as a solid.

3. Potting soil according to claim 1 or 2, wherein the polyphosphate has a number average of phosphate units per molecule of at least 5.

4. Potting soil according to any one of the preceding claims, wherein the weight ratio of polyphosphate to orthophosphate (expressed as P₂O₅) is in the range of 25:75 to 75:25.

5. Potting soil according to any one of the preceding claims, wherein the total phosphate content expressed as P₂O₅ (orthophosphate and polyphosphate) is in the range of 0.04 - 0.20 kg/m³ of potting soil.

6. Potting soil according to any one of the preceding claims, in which the fertilizer further contains one or more additional nutrients selected from: a nitrogen containing nutrient, a potassium containing nutrient, a magnesium containing nutrient, and trace elements.

7. Use of potting soil according to any one of the preceding claims, for growing a plant, preferably for growing a plant in the initial growing phase.

8. Use according to claim 7, wherein the plant is selected from the group of pot plants, bedding plants, flowerbed plants, vegetables, cut flowers, bulbous crops, trees and shrubs, preferably from the group of *Helianthus, Clematis, Pelargonium, Cineraria, Dahlia, Dianthus* (such as *Dianthus caryophyllus), Anthurium, Lilium, Orchidaceae* (such as *Cymbidium, Phalaenopsis*)*,* green vegetables (such as lettuce, endive) tomato, cucumber, paprika and strawberry.

9. Use of potting soil according to any one of claims 1 - 6, for preventing or treating a nutrient deficiency phenomenon in a plant, such as chlorosis.

10. Use of potting soil according to any one of claims 1- 6, for accelerating the plant growth, increasing leaf density, increasing the number of flowers per plant, increasing the root development, increasing the number of stems per plant and/or improving the leaf color.

11. Method for preparing a potting soil according to any one of claims 1 - 6, comprising mixing potting soil, wherein the vegetable component in the potting soil comprises at least 40 vol.% of the solids in the potting soil, with a polyphosphate containing fertilizer, wherein a part of the phosphate is present as orthophosphate and a part as polyphosphate, wherein the weight ratio of polyphosphate to orthophosphate (expressed as P₂O₅) is in the range of 1:9 to 9:1, and wherein the polyphosphate has a number average of phosphate units per molecule of 3 or more and at most of 400, preferably in a concentration of fertilizer of 0.5 - 1 kg per m³ of potting soil.

12. A method for potting a plant, which plant contains one or more roots, comprising placing in a potting soil according to any one of claims 1 - 6 at least the root or roots of the plant.

13. A method according to claim 12, wherein the plant is selected from the group of pot plants, bedding plants, flowerbed plants, vegetables, cut flowers, bulbous crops, trees and shrubs, preferably from the group of *Helianthus, Clematis, Pelargonium, Cineraria, Dahlia, Dianthus* (such as *Dianthus caryophyllus*), *Anthurium, Lilium, Orchidaceae* (such as *Cymbidium, Phalaenopsis*)*,* green vegetables (such as lettuce, endive) tomato, cucumber, paprika and strawberry.

14. Use of a phosphate containing fertilizer, wherein a part of the phosphate is present as orthophosphate and a part as polyphosphate, wherein the weight ratio of polyphosphate to orthophosphate (expressed as P₂O₅) is in the range of 1:9 to 9:1, wherein the polyphosphate has a number average of phosphate units per molecule of 3 or more and at most of 400, and, if desired, at least one nutrient selected from the group of nitrogen containing nutrients, potassium containing nutrients, magnesium containing nutrients and trace elements as basic fertilizer for growing a plant after the seedling phase in a potting soil according to any one of claims 1 to 6.

15. Use of a phosphate containing fertilizer, wherein a part of the phosphate is present as orthophosphate and a part as polyphosphate wherein the weight ratio of polyphosphate to orthophosphate (expressed as P₂O₅) is in the range of 1:9 to 9:1, wherein the polyphosphate has a number average of phosphate units per molecule of 3 or more and at most of 400, and, if desired, at least one nutrient selected from the group of nitrogen containing nutrients, potassium containing nutrients, magnesium containing nutrients and trace elements, for accelerating the plant growth, increasing the leaf density, increasing the number of flowers per plant, increasing the root development, increasing the number of stems per plant and/or improving the leaf color of a plant after the seedling phase in a potting soil according to any one of claims 1 to 6.

## Patentansprüche

1. Blumenerde, umfassend einen phosphathaltigen Dünger, wobei ein Teil des Phosphats als Orthophosphat und ein Teil als Polyphosphat vorhanden ist, wobei das Gewichtsverhältnis von Polyphosphat zu Orthophosphat (ausgedrückt als P₂O₅) in dem Bereich von 1:9 bis 9:1 liegt, wobei das Polyphosphat ein Zahlenmittel von Phosphateinheiten pro Molekül von 3 oder mehr und maximal von 400 hat und wobei der gesamte Phosphatgehalt, ausgedrückt als P₂O₅ (Orthophosphat und Polyphosphat) in dem Bereich von 0,02-0,52 kg/m³ von Blumenerde liegt und wobei die pflanzliche Komponente in der Blumenerde mindestens 40 Vol.% der Feststoffe in der Blumenerde umfasst.

2. Blumenerde nach Anspruch 1, wobei mindestens ein Teil des Polyphosphats in der Blumenerde als ein Feststoff vorhanden ist.

3. Blumenerde nach Anspruch 1 oder 2, wobei das Polyphosphat ein Zahlenmittel von Phosphateinheiten pro Molekül von mindestens 5 hat.

4. Blumenerde nach einem der vorhergehenden Ansprüche, wobei das Gewichtsverhältnis von Polyphosphat zu Orthophosphat (ausgedrückt als P₂O₅) in dem Bereich von 25:75 bis 75:25 liegt.

5. Blumenerde nach einem der vorhergehenden Ansprüche, wobei der gesamte Phosphatgehalt, ausgedrückt als P₂O₅ (Orthophosphat und Polyphosphat), in dem Bereich von 0,04-0,20 kg/m³ von Blumenerde liegt.

6. Blumenerde nach einem der vorhergehenden Ansprüche, in welcher der Dünger ferner einen oder mehrere zusätzliche Nährstoff(e) enthält, ausgewählt aus: einem stickstoffhaltigen Nährstoff, einem kaliumhaltigen Nährstoff, einem magnesiumhaltigen Nährstoff und Spurenelementen.

7. Verwendung von Blumenerde nach einem der vorhergehenden Ansprüche zum Anbauen einer Pflanze, bevorzugt zum Anbauen einer Pflanze in der anfänglichen Wachstumsphase.

8. Verwendung nach Anspruch 7, wobei die Pflanze ausgewählt ist aus der Gruppe von Topfpflanzen, Freilandpflanzen, Blumenbeetpflanzen, Gemüsen, Schnittblumen, Zwiebelgewächsen, Bäumen und Sträuchern, bevorzugt aus der Gruppe von *Helianthus, Clematis, Pelargonium, Cineraria, Dahlia, Dianthus* (beispielsweise *Dianthus caryophyllus*), *Anthurium, Lilium, Orchidaceae* (beispielsweise *Cymbidium, Phalaenopsis*), grünen Gemüsen (beispielsweise Kopfsalat, Endivie), Tomate, Gurke, Paprika und Erdbeere.

9. Verwendung von Blumenerde nach einem der Ansprüche 1-6 zum Vorbeugen oder Behandeln eines Nährstoffmangelphänomens in einer Pflanze, beispielsweise Chlorose.

10. Verwendung von Blumenerde nach einem der Ansprüche 1-6 zum Beschleunigen des Pflanzenwachstums, Erhöhen der Blattdichte, Erhöhen der Anzahl von Blüten pro Pflanze, Erhöhen der Wurzelentwicklung, Erhöhen der Anzahl von Stängeln pro Pflanze und/oder Verbessern der Blattfarbe.

11. Verfahren zur Herstellung einer Blumenerde nach einem der Ansprüche 1-6, umfassend Mischen von Blumenerde, wobei die pflanzliche Komponente in der Blumenerde mindestens 40 Vol.% der Feststoffe in der Blumenerde umfasst, mit einem polyphosphathaltigen Dünger, wobei ein Teil des Phosphats als Orthophosphat und ein Teil als Polyphosphat vorhanden ist, wobei das Gewichtsverhältnis von Polyphosphat zu Orthophosphat (ausgedrückt als P₂O₅) in dem Bereich von 1:9 bis 9:1 liegt und wobei das Polyphosphat ein Zahlenmittel von Phosphateinheiten pro Molekül von 3 oder mehr und maximal von 400 hat, bevorzugt in einer Konzentration von Dünger von 0,5-1 kg pro m³ von Blumenerde.

12. Verfahren zum Eintopfen einer Pflanze, wobei die Pflanze eine oder mehrere Wurzel(n) enthält, umfassend Platzieren von mindestens der Wurzel oder den Wurzeln der Pflanze in einer Blumenerde nach einem der Ansprüche 1-6.

13. Verfahren nach Anspruch 12, wobei die Pflanze ausgewählt ist aus der Gruppe von Topfpflanzen, Freilandpflanzen, Blumenbeetpflanzen, Gemüsen, Schnittblumen, Zwiebelgewächsen, Bäumen und Sträuchern, bevorzugt aus der Gruppe von *Helianthus, Clematis, Pelargonium, Cineraria, Dahlia, Dianthus* (beispielsweise *Dianthus caryophyllus*)*, Anthurium, Lilium, Orchidaceae* (beispielsweise *Cymbidium, Phalaenopsis*), grünen Gemüsen (beispielsweise Kopfsalat, Endivie), Tomate, Gurke, Paprika und Erdbeere.

14. Verwendung eines phosphathaltigen Düngers, wobei ein Teil des Phosphats als Orthophosphat und ein Teil als Polyphosphat vorhanden ist, wobei das Gewichtsverhältnis von Polyphosphat zu Orthophosphat (ausgedrückt als P₂O₅) in dem Bereich von 1:9 bis 9:1 liegt, wobei das Polyphosphat ein Zahlenmittel von Phospohateinheiten pro Molekül von 3 oder mehr und maximal von 400 und, falls gewünscht, mindestens einen Nährstoff hat, ausgewählt aus der Gruppe von stickstoffhaltigen Nährstoffen, kaliumhaltigen Nährstoffen, magnesiumhaltigen Nährstoffen und Spurenelementen, als Basisdünger zum Anbauen einer Pflanze nach der Setzlingsphase in einer Blumenerde nach einem der Ansprüche 1 bis 6.

15. Verwendung eines phosphathaltigen Düngers, wobei ein Teil des Phosphats als Orthophosphat und ein Teil als Polyphosphat vorhanden ist, wobei das Gewichtsverhältnis von Polyphosphat zu Orthophosphat (ausgedrückt als P₂O₅) in dem Bereich von 1:9 bis 9:1 lieg, wobei das Polyphosphat ein Zahlenmittel von Phospohateinheiten pro Molekül von 3 oder mehr und maximal von 400 und, falls gewünscht, mindestens einen Nährstoff hat, ausgewählt aus der Gruppe von stickstoffhaltigen Nährstoffen, kaliumhaltigen Nährstoffen, magnesiumhaltigen Nährstoffen und Spurenelementen, zum Beschleunigen des Pflanzenwachstums, Erhöhen der Blattdichte, Erhöhen der Anzahl von Blüten pro Pflanze, Erhöhen der Wurzelentwicklung, Erhöhen der Anzahl von Stängeln pro Pflanze und/oder Verbessern der Blattfarbe von einer Pflanze nach der Setzlingsphase in einer Blumenerde nach einem der Ansprüche 1 bis 6.

## Revendications

1. Terreau, comprenant un engrais contenant du phosphate, dans lequel une partie du phosphate est présente sous forme d'orthophosphate et une partie sous forme de polyphosphate, le rapport pondéral polyphosphate/orthophosphate (exprimé en tant que P₂O₅) se situant dans la plage de 1/9 à 9/1, le polyphosphate ayant un nombre moyen d'unités de phosphate par molécule de 3 ou plus et au maximum de 400 et la teneur totale en phosphate exprimée en tant que P₂O₅ (orthophosphate et polyphosphate) se situant dans la plage de 0,02 à 0,52 kg/m³ de terreau et le composant végétal dans le terreau comprenant au moins 40 % en volume des matières solides dans le terreau.

2. Terreau selon la revendication 1, dans lequel au moins une partie du polyphosphate est présente sous forme solide dans le terreau.

3. Terreau selon la revendication 1 ou 2, dans lequel le polyphosphate a un nombre moyen d'unités de phosphate par molécule d'au moins 5.

4. Terreau selon l'une quelconque des revendications précédentes, dans lequel le rapport pondéral polyphosphate/orthophosphate (exprimé en tant que P₂O₅) se situe dans la plage de 25/75 à 75/25.

5. Terreau selon l'une quelconque des revendications précédentes, dans lequel la teneur totale en phosphate exprimée en tant que P₂O₅ (orthophosphate et polyphosphate) se situe dans la plage de 0,04 à 0,20 kg/m³ de terreau.

6. Terreau selon l'une quelconque des revendications précédentes, dans lequel l'engrais contient en outre un ou plusieurs nutriments supplémentaires choisis parmi un nutriment contenant de l'azote, un nutriment contenant du potassium, un nutriment contenant du magnésium et des oligo-éléments.

7. Utilisation de terreau selon l'une quelconque des revendications précédentes, pour faire pousser une plante, de préférence pour faire pousser une plante dans la phase de croissance initiale.

8. Utilisation selon la revendication 7, dans laquelle la plante est choisie dans le groupe des plantes en pot, des plantes à massifs, des plantes pour parterres, des légumes, des fleurs coupées, des plantes à bulbes, des arbres et des arbustes, de préférence dans le groupe d*'Helianthus, Clematis, Pelargonium, Cineraria, Dahlia, Dianthus* (comme *Dianthus caryophyllus*), *Anthurium, Lilium, Orchidaceae* (comme *Cymbidium, Phalaenopsis*), des légumes verts (comme la laitue ou l'endive), de la tomate, du concombre, du paprika et de la fraise.

9. Utilisation de terreau selon l'une quelconque des revendications 1 à 6, pour prévenir ou traiter chez une plante un phénomène de carence en éléments nutritifs comme la chlorose.

10. Utilisation de terreau selon l'une quelconque des revendications 1 à 6, pour accélérer la croissance de la plante, augmenter la densité du feuillage, augmenter le nombre de fleurs par plante, augmenter le développement racinaire, augmenter le nombre de tiges par plante et/ou améliorer la couleur des feuilles.

11. Procédé pour préparer un terreau selon l'une quelconque des revendications 1 à 6, comprenant le mélange de terreau, dans lequel le composant végétal dans le terreau comprend au moins 40 % en volume des matières solides dans le terreau, avec un engrais contenant du polyphosphate, une partie du phosphate étant présente sous forme d'orthophosphate et une partie en tant que polyphosphate, le rapport pondéral polyphosphate/orthophosphate (exprimé en tant que P₂O₅) se situant dans la plage de 1/9 à 9/1 et le polyphosphate ayant un nombre moyen d'unités de phosphate par molécule de 3 ou plus et au maximum de 400, de préférence à une concentration d'engrais de 0,5 à 1 kg par m³ de terreau.

12. Procédé pour mettre une plante en pot, la plante contenant une ou plusieurs racines, comprenant le placement dans du terreau, selon l'une quelconque des revendications 1 à 6, au moins de la ou des racines de la plante.

13. Procédé selon la revendication 12, dans lequel la plante est choisie dans le groupe des plantes en pot, des plantes à massifs, des plantes pour parterres, des légumes, des fleurs coupées, des plantes à bulbes, des arbres et des arbustes, de préférence dans le groupe d'*Helianthus, Clematis, Pelargonium, Cineraria, Dahlia, Dianthus* (comme *Dianthus caryophyllus*)*, Anthurium, Lilium, Orchidaceae* (comme *Cymbidium, Phalaenopsis*)*,* des légumes verts (comme la laitue ou l'endive), de la tomate, du concombre, du paprika et de la fraise.

14. Utilisation d'un engrais contenant du phosphate, une partie du phosphate étant présente sous forme d'orthophosphate et une partie sous forme de polyphosphate, le rapport pondéral polyphosphate/orthophosphate (exprimé en tant que P₂O₅) se situant dans la plage de 1/9 à 9/1, le polyphosphate ayant un nombre moyen d'unités de phosphate par molécule de 3 ou plus et au maximum de 400 et si souhaité, au moins un nutriment choisi dans le groupe des nutriments contenant de l'azote, des nutriments contenant du potassium, des nutriments contenant du magnésium et des oligo-éléments en tant qu'engrais de base pour faire pousser une plante après la phase de jeune pousse dans du terreau selon l'une quelconque des revendications 1 à 6.

15. Utilisation d'un engrais contenant du phosphate, une partie du phosphate étant présente sous forme d'orthophosphate et une partie sous forme de polyphosphate, le rapport pondéral polyphosphate/orthophosphate (exprimé en tant que P₂O₅) se situant dans la plage de 1/9 à 9/1, le polyphosphate ayant un nombre moyen d'unités de phosphate par molécule de 3 ou plus et au maximum de 400 et si souhaité, au moins un nutriment choisi dans le groupe des nutriments contenant de l'azote, des nutriments contenant du potassium, des nutriments contenant du magnésium et des oligo-éléments, pour accélérer la croissance de la plante, augmenter la densité du feuillage, augmenter le nombre de fleurs par plante, augmenter le développement racinaire, augmenter le nombre de tiges par plante et/ou améliorer la couleur des feuilles d'une plante après la phase de jeune pousse dans un terreau selon l'une quelconque des revendications 1 à 6.
